# EUROPEAN PATENT APPLICATION

(11) **EP 0 793 094 A2**
(43) Date of publication of application: **03.09.1997**
(21) Application number: 96308972.7
(22) Date of filing: 11.12.1996
(51) Int. Cl.: G01N 27/28

(54) **Electrode friction chuck and stirrer assembly**

(30) Priority: 01.03.1996 US 609278
(71) Applicant: Orion Research Incorporated, Beverly, Massachusetts 01915 (US)
(72) Inventor: Hraboski ,Szefan p., Concord Massachusets 01742 (US); McIntire ,Christopher R., Tewksbury Massachusets 01878 (US); Paquette ,Thomas E., Shrewsbury Massachusets 01545 (US)
(74) Representative: Holmes, Matthew Peter

(57) **Abstract**

Described is a combination electrode friction chuck and stirrer assembly, which comprises in combination, (a) a hollow, cylindrical friction chuck body, which utilizes two o-rings to retain an electrode therein, and (b) a stirrer body, connected to the base of the chuck body, said stirrer body comprising a hollow cylindrical member having two independent side walls and an end wall, which includes a magnetic stirrer receptacle therein. The side walls of the stirrer body provides some protection to an electrode contained therein, and the use thereof ensures that test samples being measured will be completely mixed. Due to the unique o-ring configuration, the chuck is self centering. Groove depth, chuck O.D., chuck inside diameter, o-ring inside diameter, o-ring durometer and o-ring cross section all influence the size of electrode cylinders that can be accepted as well as operating forces involved therewith.

## Description

### FIELD OF THE INVENTION

This invention relates to a friction chuck for holding a test electrode and particularly to a combination friction chuck and stirrer assembly for use with test electrodes such as pH electrodes, Ion Selective Electrodes, and the like.

### BACKGROUND OF THE INVENTION

Electrode holder assemblies are often seen in chemical laboratories and other locations where it is necessary to perform either qualitative or quantitative analyses on various sample solutions or substances. The assemblies are used to support one or more test probes or electrodes that are immersed in a sample of a substance in order to obtain a desired analytic test parameter from the substance. An example of such probes is a pH meter test electrode that is used to find the H⁺ ion concentration of a sample.

A probe holder assembly usually has a probe holder platform or bracket through which the electrode is inserted so to bring it into contact with the test samples. Typically, the platform has a mounting bore, or slot, through which the electrode is inserted. The electrode is held in the mounting bore by cap on the probe that has a diameter larger than the bore, or by a thumb-screw clamp that extends into the bore to fasten the electrode. Alternatively, the tip of the electrode rests on the bottom of the container for the test sample, in which case the platform provides only lateral support for the probe.

Each of these arrangements has disadvantages. For example, electrodes having caps that rest on the top of the holder platform are not height-adjustable. Thus, if electrodes of different heights are simultaneously used with the same supporting platform the sensor elements of the probe will be at different vertical positions. Thus one probe may rest on the bottom of the sample container, while the tip of another probe may be above the top of the sample.

Thumb screw mechanisms permit height adjustment of the probes relative to the platforms. However, they pose a breakage problem when delicate probes are used.

There are also disadvantages to having the bottom tip of the electrode rest in the sample container. For example, it would interface with the operation of a magnetic stirring bar in the bottom of the container. Most importantly, in many test electrodes the actual sensor element or membrane is located at the bottom tip of the electrode, and having that tip in contact with the bottom of the sample container will interfere with proper functioning of the electrode.

A need therefore exists for an improved retainer for supporting an electrode or probe on a probe holder platform so that the probe can be supported in any desired position relative to the platform. The retainer should also accommodate electrodes of varied diameter, and can be easily used without posing a probe breakage problem.

### INFORMATION DISCLOSURE

Patents in this area include the following; U.S. 2,560,209 (Borell et al.); U.S. 2,563,062 (Perley); U.S. 3,768,115 (Hoffmann et al.); U.S. 3,837,661 (Phillippi); U.S. 4,299,363 (Datschefski); U.S. 4,516,787 (Venable); U.S. 4,569,228 (Bellgardt et al.); U.S. 4,575,947 (Stauber); and U.S. 4,667,523 (Becker et al.). The disclosures of these patents are hereby incorporated herein by reference.

### SUMMARY OF THE INVENTION

The friction chuck and stirrer assembly of the present invention comprises two distinct parts, (a) the friction chuck section which utilizes a double o-ring system to retain the electrode in a desired position; and (b) the stirrer section, which connects to the base of the friction chuck section and extends downwardly therefrom, terminating with a magnetic stirrer receptacle.

The preferred design of the stirrer section provides side protection to an electrode contained therein, and the use thereof ensures that test samples being measured will be completely mixed. The overall design of the chuck and stirrer assembly of the present invention provides a consistent force on any cylindrical electrode (providing the cylinder has a consistent O.D.) from the time the cylinder first comes in contact with the o-rings in the chuck. Due to the unique double o-ring configuration, the chuck is self centering. Groove depth, chuck O.D., chuck inside diameter, o-ring inside diameter, o-ring durometer and o-ring cross section all control the size of electrode cylinders that can be accepted as well as operating forces involved therewith.

Several advantages over previously known electrode chuck designs are provided by the friction chuck assembly of the present invention including the following; (a) the chuck is self-centering; (b) the chuck is easily machined - no injection molded tooling is required; (c) the design will accept any cylindrical object that comes in contact in contact with the o-rings enough to "deflect" them providing the object fits within the chuck's inside diameter. For this reason, the chuck provides an even greater range of use.

The chuck design of the present invention can be incorporated in a variety of applications easily and at relatively low cost.

### BRIEF DESCRIPTION OF THE DRAWINGS

The foregoing and other features and advantages of the present invention will be apparent from the following detailed description of the preferred embodiment of the invention, and as illustrated in the accompanying drawings, in which like characters refer to the same parts throughout the different views.

The drawings are not necessarily to scale, emphasis instead being placed upon illustrating the principles of invention.
Figure 1 shows an exploded view of the two component parts comprising the preferred embodiment of this invention, namely the friction chuck body (10) and the stirrer body (12).
Figure 2 shows a top perspective view of the preferred friction chuck and stirrer assembly of this invention.
Figure 3 shows a bottom perspective view of the preferred friction chuck and stirrer assembly of this invention.
Figure 4 is a left side elevation of the preferred friction chuck and stirrer assembly of this invention; the right side elevation view being identical thereto; and
Fig. 5 a left side elevation of the preferred friction chuck and stirrer assembly of this invention, rotated 90° with respect to the view shown in Figure 4; the right side elevation view from this point being identical thereto.

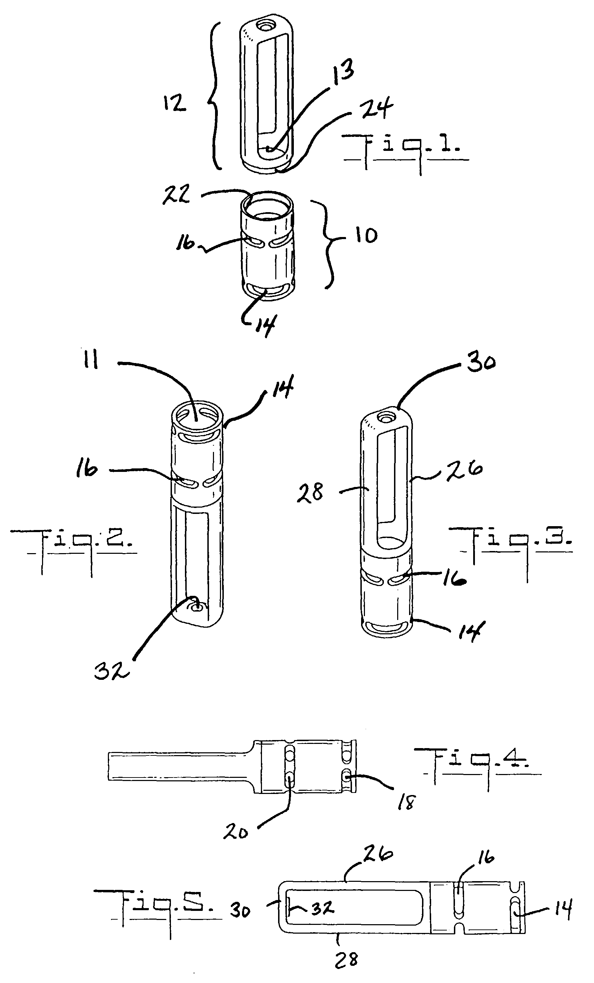

### DETAILED DESCRIPTION OF THE PREFERRED EMBODIMENT

As illustrated in the drawings accompanying this specification, the chuck body (10) is a hollow cylinder provided with an aperture (11) through which an electrode probe is inserted. The inner wall of the cylindrical chuck body incorporates two spaced apart o-ring seats (14 and 16) in which two o-rings (18 and 20) are seated. The o-ring seats (14 and 16) are partially cut-out through the chuck body wall in either 2, 3 or 4 equally spaced positions, thereby allowing the o-rings to expand outwardly in response to the presence of an electrode probe. The preferred cut-out design of each of the o-ring seats consists of three (3) openings, spaced equally apart, which ensures the application of a consistent force on any cylindrical object (providing the cylinder has a consistent O.D.) from the time the cylinder first comes in contact with the triangular shaped o-rings in the chuck body. While the preferred cut-out design of the o-ring seats causes the o-rings to assume a triangular shape in the chuck body, if a different number of cut-outs were used, different geometric shapes would result. In addition, while the illustrated embodiment shows the cut-outs as being unaligned, they can be aligned more or less than as illustrated, so long as they continue to provide the self-centering function. In addition, while the double o-ring system illustrated is preferred, more than two o-rings could be employed herein if desired, particularly if the length of the friction chuck is made longer than the preferred 1.250 inch length of the chuck body.

In the illustrated preferred embodiment, the distance from the top of the chuck body to the center of the first o-ring seat is 0.125 inches; the distance from the bottom of the chuck to the center of the second o-ring seat is 0.375 inches. The space between the two o-ring seats is 0.750 inches; and the inner diameter of the chuck body is 0.562 inches.

As further illustrated, the bottom of chuck body (10) and the top of stirrer body (12) each includes a circular flange (22 and 24) so the chuck body and the stirrer body can be snap fitted together, making the final assembly unit of this invention. If desired however, the chuck body 10 could be used alone for positioning an electrode probe.

The stirrer body (12) likewise is provided with an aperture (13) through which an electrode probe is inserted. The stirrer body (12) further includes two independent side walls (26 and 28) which are connected to end wall (30). End wall (30) of stirrer body (12) further includes a magnetic stirrer receptacle (32). A magnetic stirrer (not shown) fits within receptacle (32) and when activated by an external magnet (not shown), causes mixing of any solution into which the assembly is placed.

The o-rings (18 and 20) used in the chuck body (10) of this invention is advantageously composed of elastomeric material, thereby providing the necessary flexibility and compressibility required herein. Owing to the elastomeric properties of the o-rings in the chuck body, once an electrode probe is inserted into aperture (11), the chuck body (10) will secure the electrode at any location along the length of the electrode, yet the relative position of the probe in the chuck body (10) may be changed by simple hand adjustment. The resulting frictional force between the o-rings and the probe is then sufficient to securely hold the electrode at any desired position along the length of the electrode, yet it permits easy adjustment of probe positions.

The tubular or cylindrical chuck body (10), and the stirrer body (12) may be manufactured from any nonreactive (e.g., temperature stable, solvent stable, etc.) plastic or polymer material available. Preferably a polyphenylene oxide (PPO) material such as NORYL EN265 available from General Electric is used, for both the chuck body and the stirrer body. This material is readily machined to form each of these component parts. If desired, other materials or mixtures of materials for the chuck body and/or the stirrer body can be selected as appropriate by the skilled artisan.

The present invention has been described in detail, including the preferred embodiments thereof. However, it will be appreciated that those skilled in the art, upon consideration of the present disclosure, may make modifications and/or improvements on this invention and still be within the scope and spirit of this invention as set forth in the following claims.

## Claims

1. A combination electrode friction chuck and stirrer assembly comprising in combination, (a) a hollow, cylindrical friction chuck body, which utilizes o-rings to retain an electrode therein, and (b) a stirrer body, connected to the base of the chuck body, said stirrer body comprising a hollow cylindrical member having two independent side walls and an end wall, which includes a magnetic stirrer receptacle therein.

2. The electrode friction chuck and stirrer assembly of claim 1, wherein the chuck body includes at least two spaced apart o-ring seats.

3. The electrode friction chuck and stirrer assembly of claim 2, wherein each of the o-ring seats comprises at least two equally spaced cut-out areas of the chuck body, for retention and outward expansion of the o-rings.

4. The electrode friction chuck and stirrer assembly of claim 2, wherein each of the o-ring seats comprises at least three equally spaced cut-out areas of the chuck body, for retention and outward expansion of the o-rings.

5. The electrode friction chuck and stirrer assembly of claim 2, wherein each of the o-ring seats comprises four equally spaced cut-out areas of the chuck body, for retention and outward expansion of the o-rings.

6. The electrode friction chuck and stirrer assembly of claim 1, further comprising two spaced apart o-ring seats, each of which consists of three equally spaced cut-out areas of the chuck body.

7. The electrode friction chuck and stirrer assembly of claim 6, wherein the two spaced apart o-ring seats are unaligned in relation to one another.

8. The electrode friction chuck and stirrer assembly of claim 1, wherein the chuck body and the stirrer body are prepared from the same material.

9. The electrode friction chuck and stirrer assembly of claim 1, wherein the chuck body and the stirrer body are prepared from different materials.

10. An electrode friction chuck comprising a hollow, cylindrical body, including two spaced apart o-ring seats on the inner wall of said hollow body, each of which utilizes an o-ring to position and retain an electrode within said chuck body.

11. The electrode friction chuck of claim 10, wherein the o-ring seats are partially cut through the chuck body.

12. The electrode friction chuck of claim 11, wherein each of the o-ring seats comprises at least two equally spaced cut-out areas of the chuck body, for retention and outward expansion of the o-rings.

13. The electrode friction chuck of claim 11, wherein each of the o-ring seats comprises at least three equally spaced cut-out areas of the chuck body, for retention and outward expansion of the o-rings.

14. The electrode friction chuck of claim 11, wherein each of the o-ring seats comprises four equally spaced cut-out areas of the chuck body, for retention and outward expansion of the o-rings.

15. The electrode friction chuck of claim 10, wherein the two spaced apart o-ring seats each consist of three equally spaced cut-out areas of the chuck body.

16. The electrode friction chuck of claim 15, wherein the two spaced apart o-ring seats are unaligned in relation to one another.
